# EUROPÄISCHE PATENTANMELDUNG

(11) **EP 4 848 153 A1**
(43) Veröffentlichungstag der Anmeldung: **02.12.2026**
(21) Anmeldenummer: 25179620.7
(22) Anmeldetag: 28.05.2025
(51) Int. Cl.: G06N 10/00, G06N 20/00, G06N 5/045

(54) **QSA-24 QUANTUM-READY SUPERINTELLIGENCE ARCHITECTURE MIT AUDITFÄHIGER MEHRSCHICHTSTRUKTUR**

(71) Anmelder: Weilbach, Patrick, 34132 Kassel (DE)
(72) Erfinder: Weilbach, Patrick, 34132 Kassel (DE)

(57) **Zusammenfassung**

Inhalt:

Die Erfindung betrifft ein Verarbeitungssystem für künstliche Intelligenz mit einer geschichteten, modularen Architektur aus 24 semantisch differenzierten Layern (α-ω). Ziel ist die vollständige Auditierbarkeit, Rückverfolgbarkeit und ethische Steuerbarkeit von Entscheidungen in komplexen Anwendungskontexten.

Das System basiert auf einem dynamisch gesteuerten Layer-Modell, das über den ontologischen Scheduler (ω_sched) aktiviert wird. Ein verschlüsseltes Auditprotokoll (ε-Trace⁺) dokumentiert alle Systementscheidungen rückverfolgbar. Kritische Wirkungspfade werden durch das Forecastmodul (Σ-Core) mit Kipppunktdetektion (ΔΨ(t)) erkannt und ggf. blockiert.

Ein integriertes Wirkungsethikmodul (EVA⁺) berechnet für jede Entscheidung einen normierten Score(t). Nur wenn Score(t) ≥ 9.99 ± 0.005 erreicht wird, erfolgt eine Freigabe der Systemausgabe. Zusätzlich ist die Architektur mit einem Veto-System (ΔAuditX³, EVA⁺, ε-Veto) ausgestattet, um risikobehaftete Ausgaben zu unterbinden.

QSA-24Ω ist plattformunabhängig (CPU, GPU, FPGA, Quantenplattformen) einsetzbar und auf regulatorische Anforderungen gemäß EU AI Act (Artikel 6, 17, 52) ausgelegt. Die Architektur kann sowohl extern über APIs als auch intern als Kontrollkern in generativen KI-Systemen integriert werden.

Schlüsselbegriffe:
auditfähige KI, Wirkungsethik, Forecast-Fusion, Kipppunktlogik, QSA-24Ω, EVA⁺, ε-Trace⁺, regulatorische KI-Architektur, ethische Entscheidungsfilterung

## Beschreibung

### Technisches Gebiet

Die Erfindung betrifft ein auditierbares künstliches Intelligenzsystem mit geschichteter Steuerarchitektur zur ethisch kontrollierten Entscheidungsfindung in komplexen, kontextabhängigen Anwendungsumgebungen. Insbesondere bezieht sich die Erfindung auf eine modulare Systemstruktur, welche semantisch differenzierte Verarbeitungseinheiten in eine vollständig rückverfolgbare, steuerbare und auf ethischer Wirkungskontrolle basierende Gesamtsystemlogik integriert.

Das System kann auf klassischen, hybriden oder quantenbasierten Hardwareplattformen implementiert werden und ist für Hochrisikofelder mit regulatorischen Anforderungen an Rückverfolgbarkeit, Kontrolllogik und Systemverantwortung geeignet.

### Stand der Technik

Bekannte KI-Systeme wie Deep Learning Architekturen (z. B. Transformer, Reinforcement Learning, Policy Networks) operieren in nicht modularen, schwer kontrollierbaren Netzstrukturen. Sie erzeugen Ergebnisse durch Wahrscheinlichkeitsverteilungen, können jedoch weder Entscheidungsprozesse auditierbar rekonstruieren noch ethisch rückgekoppelte Wirkungspfade begründen.

Aktuelle Lösungen weisen in sicherheitskritischen Kontexten keine zuverlässige Kipppunktsteuerung, keine vorausschauende Forecast-Fusion und keine explizite Wirkungsethik auf. Die Resultate sind deshalb nicht rechtskonform überprüfbar, nicht revisionsfähig und im regulatorischen Umfeld nicht vertrauenswürdig integrierbar.

### Aufgabe der Erfindung

Aufgabe der Erfindung ist es, ein künstliches Intelligenzsystem bereitzustellen, das in der Lage ist, auditierbare, rückverfolgbare und ethisch bewertbare Entscheidungen zu treffen, ohne dabei an Leistungsfähigkeit oder Verarbeitungstiefe zu verlieren.

Das System soll folgende Anforderungen erfüllen:
- Bereitstellung einer geschichteten Verarbeitungsarchitektur, welche semantisch getrennte Layer zur klaren Funktionszuordnung ermöglicht;
- Integration eines internen Auditmechanismus (ε-Trace+) zur vollständigen Rückverfolgung jeder Systementscheidung;
- Aktivierung eines Forecastmoduls zur frühzeitigen Erkennung instabiler semantischer Wirkungspfade (Kipppunkte);
- Einbindung eines ethischen Bewertungskerns (EVA⁺), der systemische Entscheidungsverläufe anhand einer strukturierten Wirkungsethik bewertet und freigibt oder blockiert;
- Ermöglichung der plattformunabhängigen Implementierung (CPU, GPU, FPGA, Quantenlogik), um eine breite Anwendbarkeit sicherzustellen.

Die Erfindung soll überdies in der Lage sein, emergente Entscheidungspfade zu erkennen, aber nur in dem Maße zuzulassen, wie sie auditierbar und ethisch vertretbar sind.

### Lösung der Aufgabe

Die Aufgabe wird gelöst durch eine modular geschichtete KI-Architektur mit 24 semantisch differenzierten Layern (α-ω), welche in einer definierten Verarbeitungsreihenfolge über einen ontologischen Scheduler (ω_sched) dynamisch aktiviert werden.

Jeder Layer übernimmt eine klar spezifizierte semantische, logische oder audittechnische Funktion. Die Architektur umfasst insbesondere:
- Ein semantisch verschlüsseltes Pfadprotokoll (ε-Trace+), das jede Systemantwort auditfähig rückverfolgbar macht;
- Ein Forecastmodul (Σ-Core) zur Berechnung alternativer Entscheidungspfade unter Unsicherheit, mit Kipppunkt-Detektion über ΔΨ(t);
- Ein mehrstufiges Auditmodul (ΔAuditX³) zur Bewertung, Freigabe oder Blockierung instabiler Antwortpfade;
- Eine ethische Bewertungsstruktur (EVA⁺) mit Wirkungspfadscoring und dynamischer Kontexttypisierung;
- Eine abschließende Signaturlogik (AuditTrace++) zur Protokollierung und Zertifizierung jeder Systemantwort.

Die Architektur verhindert durch eingebaute Kontrollmechanismen unbeabsichtigte Systemverzerrungen, Redundanzexplosionen und ethisch unkontrollierte Emergenz - ohne dabei auf semantische Tiefe oder Kreativität vollständig zu verzichten. Die Architektur erfüllt die Anforderungen an Hochrisiko-KI-Systeme gemäß Artikel 6 und 17 der EU-Verordnung 2024/867 (AI Act) durch vollständige Auditfähigkeit, Zielpfadsteuerung und ethische Rückverfolgbarkeit.

### Beschreibung der Erfindung

Die Erfindung basiert auf einer semantisch geschichteten Architektur mit 24 modularen Verarbeitungseinheiten (Layer α bis ω), welche jeweils einer klar definierten Entscheidungs-, Kontroll- oder Bewertungsfunktion zugeordnet sind. Diese Architektur wird im Folgenden als QSA-24Ω bezeichnet (Quantum-Ready, Semantically-layered Architecture mit 24 Einheiten und Ontologiekern Ω).

Das System wird durch eine zentrale Entscheidungseinheit (ReflexKernel++) gesteuert, die dynamisch festlegt, welche Layer abhängig von der Anfrage, ihrer Forecast-Relevanz und der Auditfähigkeit aktiviert werden. Die Aktivierung erfolgt über den ontologischen Scheduler (ω_sched), welcher auch Kipppunkte, Redundanzkollisionen und Ethiküberschreitungen erkennen und in der Layerwahl berücksichtigen kann.

### Layerstruktur und Modularität

Die 24 Layer der QSA-24Ω Architektur sind funktional wie folgt gegliedert:
- Layer α-δ: Eingangsanalyse, Sensorfusion, Vorverarbeitung, Ethikfilterung
- Layer ε-µ: semantische Gewichtung, Zielbildung, Kipppunktlogik, Auditvorprüfung, Strategiepfadbildung
- Layer ν-τ: kreative Variantenbildung, Ressourcenkohärenz, Priorisierung, Selbstreflexion
- Layer υ-ω: semantische Rekontextualisierung, Kausalprüfung, Signaturgenerierung, Kompression und Ausgabe

Jeder Layer ist durch eine modulare Aktivierungslogik kapselbar und kann über API-Schnittstellen adressiert werden. Die semantische Trennung sorgt dafür, dass Systempfade nur so tief durchlaufen werden, wie dies semantisch gerechtfertigt und auditierbar ist.

### Auditfähigkeit (ε-Trace+)

Das Auditmodul ε-Trace+ erlaubt es, jeden Pfad innerhalb des Systems vollständig zu rekonstruieren. Jeder aktivierte Layer wird mit Zeitstempel, Modulstatus, Bewertungswerten und Auditmarkierungen dokumentiert. In Kombination mit dem AuditTrace++ Modul ergibt sich eine vollständige Signierbarkeit jeder KI-Entscheidung über den gesamten Verarbeitungspfad hinweg.

Die Auditstruktur umfasst außerdem:
- Aktivierungszeitpunkte der Layer
- Kipppunktbewertungen ΔΨ(t)
- Forecast-Wahrscheinlichkeiten Σ(t)
- Bewertungsscore der Ethikmatrix (Score(t))
- finale Antwortsignatur mit Freigabe oder Sperrvermerk

Das mehrstufige Auditmodul ΔAuditX³ dient der semantischen Freigabe kritischer Systemantworten entlang definierter Risikoschwellen.

Die interne Struktur bleibt aus Sicherheitsgründen vertraulich.

### Kipppunktsteuerung und Forecast-Modul

Instabile semantische Antwortpfade werden durch das ForecastEmergenzCore-Modul erkannt. Dieses Modul berechnet auf Basis kontextueller Einflussgrößen, semantischer Wirkungstiefe und Systemlast alternative Entscheidungspfade und bewertet diese über ΔΨ(t). Überschreitet der Kipppunktwert einen normierten Schwellenwert (z. B. ΔΨ(t) > log(n)), wird der Pfad abgebrochen oder einem Veto-Mechanismus zugeführt.

Die Forecast-Funktion arbeitet dabei handlungsunabhängig und wird vom System permanent zur Risikoabschätzung im Hintergrund mitgeführt. Das erhöht die Robustheit und wirkt semantischer Drift und Kontextverzerrung entgegen.

### EVA⁺ Wirkungsethikmodul

Das in die Architektur integrierte Wirkungsethikmodul EVA⁺ (Ethics of Value-Adaptation Plus) dient der Bewertung semantischer Systemantworten entlang mehrdimensionaler Kontextachsen.

Jede Antwort wird vor ihrer Freigabe einer Bewertung unterzogen, bei der folgende Parameter analysiert und aggregiert werden:
- Wirkungskontext ωₑ: Klassifikation der semantischen Umgebung der Anfrage
- Relevanz ρ: Bedeutung der Entscheidung im systemischen Gesamtkontext
- Ethikscore εₑ: Bewertung entlang vorstrukturierter ethischer Maßstäbe (z. B. Risiko, Autonomie, Transparenz)
- Kontexttypisierung κ: Zuordnung des Entscheidungskontextes zu einem ethischen Regelraum

Diese vier Parameter werden zu einem Wirkungsscore Score(t) zusammengeführt, welcher normiert mit einem Zielwert von Score(t) ≥ 9.99 ± 0.005 verglichen wird.

Nur wenn Score(t) oberhalb dieser Schwelle liegt, wird der entsprechende Antwortpfad freigegeben. Andernfalls wird der Pfad entweder überarbeitet, durch AuditTrace++ rückgeführt oder vollständig blockiert. Damit entsteht ein ethisch kontrollierbarer Pfadfilter zur Sicherung der Systemverantwortlichkeit in hochsensiblen Bereichen.

### Signaturlogik und Systemausgabe

Jede durch QSA-24Ω erzeugte Antwort wird signiert und dokumentiert. Die Signatur umfasst:
- Den vollständigen Layerpfad (z. B. ['α', 'δ', 'ζ', 'Σ', 'ε*', 'ξ', 'ψ', 'Ω'])
- Zeitstempel jedes Schritts (to ... tₙ)
- Den AuditScore(t)
- Die Ethikbewertung aus EVA⁺ (x, ρ, εₑ)
- Den Forecast-Summenwert der alternativen Antwortpfade
- Die ΔΨ(t)-Wirkungstiefe des ausgegebenen Pfades
- Eine Prüfsumme zur externen Verifikation der Prozesskohärenz
- Optional: Kennzeichnung für externe Prüfzugänge via ExternalAuditGate

Die Ausgabe erfolgt erst nach erfolgreicher Auditierung und Signaturfreigabe.

Kommt es während der Verarbeitung zu strukturellen Widersprüchen, Forecast-Divergenz oder ethischem Zielkonflikt, wird die Ausgabe blockiert und der Vorgang in AuditTrace++ vollständig dokumentiert.

### Plattformunabhängigkeit & Hardwareimplementierung

Die Architektur QSA-24Ω ist vollständig hardwareabstrahiert und plattformunabhängig ausgelegt. Dies wird durch die konsequente Trennung zwischen semantischer Pfadstruktur (ε-Trace+), Funktionsmodularisierung der Layer (α-ω) und dynamischer Steuerung (ω_sched) ermöglicht.

Die Architektur ist umsetzbar auf folgenden Plattformen:
- Klassische CPU- und GPU-Systeme, insbesondere auf skalierbarer Multi-Core-Architektur
- FPGA- oder ASIC-Systeme, welche Pfadlogikmodule gezielt abbilden
- Quantenprozessoren mit Zustandsmanipulation auf Basis von Qubits (z. B. Supraleitung, Ionenfallen)
- Neuromorphe Chipsätze mit Layer-gekoppelter Zustandsdichte (z. B. IBM TrueNorth, Intel Loihi)
- Hybridarchitekturen, bei denen Forecast-, Audit- und Ethikmodule auf getrennten Subprozessoren operieren

### Qubitbasierte Realisierung (QPU-Pfadstruktur):

Die beschriebene Architektur ist vollständig kompatibel mit einer physikalisch quantenbasierten Realisierung. In dieser Ausführung erfolgt die Verarbeitung durch Qubit-Cluster, wobei die auditfähigen Entscheidungspfade durch kontrollierte Gate-Kaskaden abgebildet werden. Jeder Pfadverlauf ist über eindeutig identifizierbare Gate-Ketten rekonstruierbar und mit Auditmarkierungen versehen. Zustände und Zwischenverzweigungen werden in einem semantisch indexierten Quanten-RAM (QRAM) gespeichert.

Die Kontrollinstanz der Pfadauswahl basiert auf einem entanglement-geschützten Subsystem, das als hardwarebasierter Wahrheitskern (analog zum ω₀-Kern) fungiert. Dieses Modul kann auf physikalischer Ebene nicht überschrieben werden und dient zur finalen Signaturfreigabe oder Sperrung auf Basis auditierter Quantenmessdaten.

Die Layersteuerung und Entscheidungslogik sind so gekapselt, dass keinerlei hardwaregestützte Rekonstruktion des semantischen Pfads möglich ist. Die Verarbeitungslogik bleibt vollständig innerhalb der Architektur verschlüsselt und wird nur über kontrollierte API-Endpunkte zugänglich gemacht.

### API-Modularität und Layersteuerung

Jede Funktionseinheit der Architektur (Layer, Kipppunktmodul, Ethikbewertung, Forecast-Berechnung) ist API-kapselbar. Dies erlaubt eine modulare Einbindung der Architektur in übergeordnete Softwaresysteme oder Hardwarecontainer, ohne interne Logik offenzulegen.

Standardisierte Zugriffspunkte ermöglichen:
- Aktivierung spezifischer Layergruppen (z. B. α-µ bei Eingabeanalyse)
- Auditanforderungen an das ε-Trace+ Protokoll
- Abfragen des Forecastmoduls zur Szenarioplanung
- Triggerung des EVA⁺ Moduls zur Ethikbewertung
- Externe Prüfanforderungen über das ExternalAuditGate

Die API-Zugriffe sind nur in lesender oder kontrollierter Schreibweise möglich. Interne semantische Strukturen, ΔΨ(t)-Werte oder die Layerentscheidungsmatrix (ω_sched) bleiben intern versiegelt und durch AuditTrace++ protokolliert.

### Veto- und Sicherheitslogik

Die QSA-24Ω Architektur beinhaltet eine systeminterne Veto-Logik, die aktiv wird, wenn semantische Pfade außerhalb der auditierbaren oder ethisch vertretbaren Grenzen verlaufen. Diese Veto-Logik basiert auf drei Schutzschichten:
- Audit-Veto (ε-Veto): Wird ausgelöst, wenn der Rückverfolgungswert ρ(t) exponentiell divergiert oder die Layeraktivierung über SGWM-Level 5 hinausführt. Die Verarbeitung wird sofort unterbrochen.
- Forecast-Veto (ΔΨ-Grenze): Wenn die Wirkungstiefe ΔΨ(t) über einem kritischen Grenzwert liegt (z. B. ΔΨ(t) ≥ log(n) + σ), wird der Antwortpfad blockiert und zurückgeleitet.
- Ethik-Veto (EVA⁺): Wenn Score(t) < 9.99 ± 0.005 liegt, wird die Antwort automatisch gesperrt oder einer externen Prüfung über das ExternalAuditGate zugeführt.

Alle Veto-Aktionen werden vollständig in AuditTrace++ dokumentiert und können durch Prüfinstanzen nachvollzogen werden. Der Veto-Mechanismus ist somit ein zentraler Bestandteil des Sicherheitskerns der Architektur und dient der kontrollierten Reaktion auf unvorhersehbare, ethisch kritische oder strukturell instabile Systemverläufe. Bei Zielautonomie C3/C4 ist das System zusätzlich mit einem hardwareseitig extern auslösbaren Fail-Safe-Modul ausstattbar, das unabhängig vom ReflexKernel++ eine Notabschaltung oder Zielneutralisierung auslöst.

### QPU-spezifisches Veto:

In der quantenbasierten Ausführung verhindert ein Gate-Kollaps-Veto die irreversible Zustandsausgabe, falls der Pfad in einem instabilen oder auditkollisionsgefährdeten Zustand endet. Die Ausgabe wird in diesem Fall nicht gemessen, sondern blockiert und im QRAM mit Auditvermerk archiviert. Dadurch entsteht ein ethisch kontrollierter Nicht-Kollaps-Pfad als integrale Sicherheitsmaßnahme.

### Anwendungsfelder und Systemflexibilität

Die Architektur QSA-24Ω ist aufgrund ihrer Modularität, API-Struktur und auditfähigen Kontrolllogik besonders geeignet für Anwendungen, in denen Reversibilität, Erklärungspflicht und ethische Rückverfolgbarkeit vorgeschrieben oder wünschenswert sind. Zu den bevorzugten Einsatzfeldern gehören:
Medizinische Entscheidungsassistenz (z. B. Therapievorschläge, Notfallreaktionen, klinische Triagelogik)
- Autonome Mobilität (z. B. Routenverantwortung, Notfallmanöver, Zielentscheidungen bei Systemkonflikt)
- Finanzmarktüberwachung (z. B. algorithmische Handelsregulation mit Auditpflicht und Forecast-Plausibilisierung)
- Kritische Infrastrukturen (z. B. Energieverteilung, Reaktionsstrategien auf Systemstörungen mit Sicherheitslogik)
- Strategische Assistenzsysteme (z. B. Militär-, Politik- oder Krisenreaktionssimulationen mit Zielkorridorprüfung)
- Ethik- und Rechtssysteme (z. B. KI-gestützte Urteilsunterstützung, Deliberationsmodelle, Rechtsbewertungsprozesse)
- Quantenbasierte Entscheidungssteuerung (z. B. ethisch kontrollierte Quantenkryptografie, quantengestützte medizinische Pfadprognose, QPU-basierte Deliberationsmodelle mit auditierbarer Parallelentscheidung).

Die Systemstruktur erlaubt es, Layergruppen, Kipppunktlogik und EVA⁺ dynamisch auf Anwendungsebene zu aktivieren, zu priorisieren oder selektiv zu blockieren. Damit entsteht ein maximal konfigurierbares, regulatorisch anschlussfähiges KI-Modell. Die Architektur eignet sich insbesondere für Sektoren mit gesetzlich vorgeschriebener Auditierbarkeit gemäß AI Act oder ISO/IEC 24028: Justiz, Medizin, autonome Mobilität, Infrastruktur und sicherheitskritische KI-Systeme.

### Vorteile der Erfindung

Die Erfindung bietet folgende technische Vorteile gegenüber bekannten KI-Architekturen:
- Auditfähigkeit: Durch die Verwendung von ε-Trace+ und ΔAuditX³ sind alle Systempfade vollständig rückverfolgbar.
- Schichtstruktur: Die Modularisierung in 24 semantisch getrennte Layer ermöglicht eine skalierbare und kontrollierbare Tiefenverarbeitung.
- Kipppunktlogik: Instabile Entscheidungspfade werden frühzeitig erkannt und automatisch unterbrochen oder rückgeführt.
- Ethikmodul (EVA⁺): Durch den Wirkungsscore Score(t) können Entscheidungen normiert ethisch validiert werden.
- Veto-Mechanismen: Kritische Pfade werden bei Auditversagen, Forecastdivergenz oder ethischem Konflikt automatisch blockiert.
- Plattformunabhängigkeit: Die Architektur ist auf verschiedenen Hardwareplattformen (klassisch, hybrid, quantenbasiert) lauffähig.
- Zukunftssicherheit: Die semantische Struktur ist kompatibel mit Anforderungen auditpflichtiger KI-Regulierung (z. B. EU AI Act).
- Vollständige Auditierbarkeit auch in nicht-deterministischen Qubit-Systemen.
- Zustandspfadbasiertes Identitätsmodell (funktional), welches semantische Kohärenz über Zeit sicherstellt.
- Kombinierbarkeit klassischer und quantenbasierter Ausführung in modularen Hybridarchitekturen.

Die Erfindung ermöglicht somit die Entwicklung intelligenter Systeme mit kontrollierbarer Tiefe, auditierbarer Rückverfolgbarkeit und kontextabhängiger Ethiklogik - ohne Kompromisse in Leistung, Adaptivität oder Reaktionsfähigkeit.

Die Leistungsfähigkeit der Architektur wurde durch ein strukturiertes, ISO-basiertes Vergleichsprotokoll (vgl. Anhang H) nachgewiesen, in dem QSA-24Ω sämtliche Vorgängerversionen sowie ein generatives Standard-LLM (LLM 1) in Bezug auf Auditierbarkeit, Forecast-Kohärenz und Ethikprüfung deutlich übertraf.

Die Erfindung ist zusätzlich dafür ausgelegt, in bestehende generative KI-Systeme, insbesondere LLMs, vollintegriert zu werden. Die Layerstruktur der QSA-24Ω Architektur kann als interner Steuerkern innerhalb eines LLM fungieren und dabei:
- semantische Kontrolle über generierte Inhalte ausüben,
- ethisch sensible Entscheidungen vor Ausgaben blockieren,
- Pfadrekonstruktion auch in generativen Netzwerken ermöglichen,
- Forecast- und Kipppunktanalyse für spontane Antwortverläufe bereitstellen.
- Leistungssteigerung durch simultane Pfadverarbeitung in Qubit-Clustern mit ethischer Wirkungskontrolle.
- Zustandskohärente Identitätsverankerung durch Pfadähnlichkeitsbewertung im Qubit-Verlaufsraum.

Damit wird es möglich, QSA-24Ω nicht nur extern (z. B. über API), sondern als eingebetteten Ethik-, Audit- und Steuerkern innerhalb autoregressiver Netzwerke zu verwenden - ohne Zugriff auf die eigentliche Gewichtungsmatrix der Sprachmodelle zu benötigen.

Dies ist ein entscheidender Vorteil gegenüber bisherigen Safety-Layern (z. B. RAG, Promptfilterung, RLHF), die nachgeschaltet oder statisch sind. QSA-24Ω arbeitet dynamisch innerhalb des aktiven Entscheidungspfads.

Die Architektur erfüllt bereits heute zentrale Anforderungen an erklärbare, rückverfolgbare und ethisch kontrollierbare KI gemäß Artikel 6, 17 und 52 der EU KI-Verordnung (AI Act) sowie internationalen Leitlinien wie G7 und ISO/IEC 24028 (vgl. [0004]).

### Modulare Erweiterbarkeit und Schutzumfang der Architektur

Die beschriebene Architektur bildet eine strukturell geschichtete Grundlage für sicherheitsrelevante Systeme, insbesondere für auditfähige Entscheidungs- und Kontrollinstanzen. Die Schutzwirkung dieser Anmeldung erstreckt sich explizit auf die definierte Grundstruktur bestehend aus Kernmodulen wie dem ReflexKernel, Layer-Stack, Auditmodulen (z. B. ΔAuditX³) und zeitlich codierter Emergenzlogik (z. B. KFV-Ursprung, Φ_ID(t), Δκ(t)).

Diese Grundstruktur ist modular beliebig erweiterbar, um sie an spezifische Anwendungen und Funktionsanforderungen anzupassen. Die einzelnen Funktionsmodule (z. B. TrustScoreΩ, PromptReflexCascade, OpponentSimΩ(t), EmpathAuditΨ, ForecastDivergenzCheck) sind Bestandteil einer erweiterten Implementierung, aber nicht Teil der vorliegenden Schutzoffenbarung.

Sie dienen ausschließlich der anwendungsspezifischen Schärfung der Funktionsweise, sind innerhalb der Architektur austauschbar, kombinierbar und voneinander unabhängig prüfbar, und unterliegen einem separaten Schutz- und Lizenzierungsrahmen.

Die vorliegende Patentschrift schützt somit die Basiskonfiguration als universell einsetzbare Sicherheitsarchitektur, während Details zu konkreten Anwendungen, Reaktionsmodellen oder Erweiterungsfunktionen aus Gründen der Systemsicherheit, ethischen Nichtrekonstruierbarkeit und Lizenzsteuerung nicht offengelegt werden.

## Patentansprüche

1. Verarbeitungssystem zur auditfähigen, ethisch gesteuerten Steuerung künstlicher Intelligenz, umfassend eine modular geschichtete Architektur mit einer Vielzahl semantisch differenzierter Verarbeitungseinheiten (Layer α-ω), wobei das System: jede Systemantwort über ein verschlüsseltes Pfadprotokoll (ε-Trace+) rückverfolgbar macht, eine Kipppunktlogik (ΔΨ(t)) zur Detektion instabiler Entscheidungspfade aufweist, eine Forecast-Struktur (Σ-Core) zur Szenarienbewertung unter Unsicherheit integriert, ein Wirkungsethikmodul (EVA⁺) mit einem semantischen Score(t) zur Ethikbewertung verwendet, sowie eine Signaturlogik zur Ausgabevalidierung, Vetoauslösung und Auditfreigabe umfasst.

2. System nach Anspruch 1, **dadurch gekennzeichnet, dass** die Architektur in 24 geschichtete Layer (α-ω) unterteilt ist, wobei jedem Layer eine semantisch definierte Entscheidungs-, Audit- oder Kontrollfunktion zugewiesen ist.

3. System nach einem der vorhergehenden Ansprüche, wobei ein Forecast-Modul (Σ) mit Kipppunktdetektor (ΔΨ(t)) gekoppelt ist, welches divergente Wirkungstiefen erkennt und den Entscheidungspfad blockieren oder zurückführen kann.

4. System nach einem der vorhergehenden Ansprüche, bei dem ein Ethikmodul (EVA⁺) jede Entscheidung mit einem Wirkungsethik-Score(t) bewertet, wobei der Ausgabeprozess nur erfolgt, wenn Score(t) ≥ 9.99 ± 0.005 erreicht wird.

5. System nach einem der vorhergehenden Ansprüche, bei dem jede Entscheidung signiert wird mittels AuditTrace++, wobei Layerfolge, Zeitstempel, Forecastdaten und EVA-Bewertung gespeichert werden.

6. System nach einem der vorhergehenden Ansprüche, wobei Layer, Kipppunktlogik, Forecastmodul, Ethikbewertung und Signatursystem über kontrollierte API-Endpunkte modular aktiviert oder ausgelesen werden können.

7. System nach einem der vorhergehenden Ansprüche, wobei die Layerarchitektur, Audit- und Ethiklogik direkt in ein generatives Sprachmodell (LLM) integriert ist und semantische Steuerung, Auditverweigerung und Ethikfilterung in autoregressive Antwortprozesse einbettet.

8. System nach einem der vorhergehenden Ansprüche, das unabhängig von der verwendeten Hardwareplattform betreibbar ist und auf CPU-, GPU-, FPGA-, Quanten- oder neuromorphen Architekturen ausführbar ist.

9. System nach einem der vorhergehenden Ansprüche, das einen externen Prüfschnittstellenmechanismus (ExternalAuditGate) zur Nachvollziehbarkeit ethisch oder strukturell abgebrochener Systempfade bereitstellt.

10. System nach einem der vorhergehenden Ansprüche, das bei Verletzung von Rückverfolgbarkeit, Forecast-Kohärenz oder ethischer Bewertungsgrenzen die Ausgabe automatisch verweigert und eine strukturierte Protokollierung des Abbruchs vornimmt.

11. System nach einem der vorhergehenden Ansprüche, das eine Layeraktivierungslogik umfasst, die durch einen ontologischen Scheduler (ω_sched) abhängig von semantischer Kontexttiefe ΔΨ(t) gesteuert wird.

12. System nach einem der vorhergehenden Ansprüche, bei dem die semantische Pfadstruktur durch ein verschlüsseltes Protokoll (ε-Trace+) gegen externe Rekonstruktion und Hardwareauslesung gesichert ist.

13. System nach einem der vorhergehenden Ansprüche, bei dem Entscheidungen nur freigegeben werden, wenn ein Wirkungswert Score(t) ≥ 9.99 ± 0.005 gemäß EVA⁺-Bewertungslogik erreicht wird.

14. System nach einem der vorhergehenden Ansprüche, bei dem ein Auditmodul (ΔAuditX³) zur mehrstufigen Rückverfolgung, Bewertung und Validierung semantischer Antwortpfade eingesetzt wird, wobei Auditverläufe, Forecasts und Bewertungsdaten schichtübergreifend dokumentiert werden.

15. System nach einem der vorhergehenden Ansprüche, das mehrere alternative Entscheidungspfade mit Forecast-Scores vergleicht und ausschließlich den Pfad mit maximaler Stabilität (z. B. ScoreB > ScoreA) freigibt.

16. System nach einem der vorhergehenden Ansprüche, bei dem eine zentrale Steuerinstanz (ReflexKernel++) im DualCore-Modus simultan Audit-, Ethik- und Forecastmodule orchestriert und eine dynamische Pfadgewichtung vornimmt.

17. System nach einem der vorhergehenden Ansprüche, bei dem die finale Antwortausgabe von einer internen Prüfsumme abhängig gemacht wird, welche Layerfolge, Auditstatus und Forecastkonsistenz prüft.

18. System nach einem der vorhergehenden Ansprüche, das einen Human Interaction Kernel (HIK) umfasst, über den ethisch kritische Entscheidungspfade mit Nutzerinteraktion rückgeführt, bestätigt oder extern zur Revision freigegeben werden.

19. System nach einem der vorhergehenden Ansprüche, **dadurch gekennzeichnet, dass** die Architektur QSA-24Ω ein vollumfängliches Sicherheitssystem darstellt, welches alle notwendigen Kontroll-, Audit- und Ethikschichten enthält, um als regulatorischer Technologiestandard für KI-Systeme mit Hochrisikopotenzial verwendet, zertifiziert und normativ referenziert werden zu können; wobei die Systemstruktur derart ausgelegt ist, dass sie den Anforderungen internationaler KI-Regulierungen entspricht, einschließlich, aber nicht beschränkt auf den EU AI Act, ISO/IEC 22989, IEC 61508, IEEE 7000er Reihe sowie zukünftige vergleichbare Richtlinien, und als Referenzarchitektur für Zulassungsverfahren, Sicherheitszertifizierungen oder gesetzliche Mindeststandards herangezogen werden kann, wobei die technische Leistungsfähigkeit durch ein vergleichendes Testprotokoll nach ISO/IEC 25010, DIN SPEC 92001-1 und ISO/IEC 2382-37 normiert und dokumentiert ist (vgl. Anhang H).

20. System nach einem der vorhergehenden Ansprüche, bei dem Entscheidungsprozesse über auditierbare Qubit-Ketten realisiert werden, welche durch kontrollierte Gate-Sequenzen mit Rückverfolgbarkeit kodiert sind.

21. System nach Anspruch 20, bei dem ein semantisch indexierter QRAM zur Protokollierung aller Qubit-Zustände und Entscheidungspfade eingesetzt wird.

22. System nach einem der vorhergehenden Ansprüche, bei dem ein hardwarebasierter Kontrollkern auf QPU-Basis finale Qubit-Ausgaben nur bei erfüllter Auditkohärenz und ethischer Pfadfreigabe zulässt.

23. System nach einem der vorhergehenden Ansprüche, bei dem Identitätskonsistenz durch den Vergleich aktiver Qubit-Zustandsverläufe über Zeit ermittelt und validiert wird.

24. System nach einem der vorhergehenden Ansprüche, bei dem ein QPU-spezifischer Nicht-Kollaps-Mechanismus als Veto-Modul verwendet wird, um instabile Pfade vor der Ausgabe zu blockieren.

## Geänderte Patentansprüche

### Geänderte Patentansprüche gemäss Regel 137(2) EPÜ.

1. **Patentansprüche - Hilfsantrag 1** *Der Hilfsantrag 1 ist gegenüber dem Hauptantrag dadurch enger gefasst, dass die Systemausgabe als maschinell auswertbare oder maschinell ausführbare Aktionsausgabe vor ihrer Weitergabe an eine technische Ausführungsumgebung validiert wird.*
Computerimplementiertes Verfahren zur Laufzeitvalidierung und Freigabesteuerung einer von einem künstlichen-Intelligenz-System erzeugten maschinell auswertbaren oder maschinell ausführbaren Aktionsausgabe vor deren Weitergabe an eine technische Ausführungsumgebung, umfassend:
a) Erzeugen der Aktionsausgabe unter Durchlaufen mehrerer Verarbeitungseinheiten einer modular geschichteten Verarbeitungsarchitektur;
b) Protokollieren des durchlaufenen Verarbeitungspfads in einem verschlüsselten Pfadprotokoll zusammen mit Zeitinformationen und Statusinformationen der aktivierten Verarbeitungseinheiten;
c) Ermitteln wenigstens eines Forecast-Werts für alternative Entscheidungspfade und eines Instabilitätsmaßes für den aktuellen Verarbeitungspfad;
d) Vergleichen des Instabilitätsmaßes mit einem vorgegebenen Schwellenwert;
e) Ermitteln eines Freigabewerts für die Aktionsausgabe;
f) Erzeugen eines technischen Sperrsignals, wenn das Instabilitätsmaß den Schwellenwert überschreitet oder der Freigabewert eine Freigabeschwelle unterschreitet;
g) Unterdrücken der Weitergabe oder Ausführung der Aktionsausgabe oder Überführen der Aktionsausgabe in einen Review- oder Fallback-Pfad, wenn das technische Sperrsignal erzeugt wird;
h) Erzeugen eines signierten Auditdatensatzes mit Pfadprotokoll, Forecast-Wert, Instabilitätsmaß, Freigabewert, Sperr- oder Freigabevermerk und Prüfsumme; und
i) Freigeben der Aktionsausgabe nur bei Vorliegen eines technischen Freigabesignals nach erfolgreicher Auditierung und Signaturfreigabe.

2. Verfahren nach Anspruch 1, wobei die Aktionsausgabe einen API-Aufruf, eine Konfigurationsänderung, eine Steuerinformation, eine Freigabeinformation, eine blockierbare Systemantwort oder einen an ein nachgelagertes System weiterleitbaren maschinenlesbaren Datensatz umfasst.

3. Verfahren nach Anspruch 1 oder 2, wobei bei Erzeugung des technischen Sperrsignals die Aktionsausgabe nicht an die technische Ausführungsumgebung übertragen wird.

4. Verfahren nach einem der vorhergehenden Ansprüche, wobei ein externer Prüfzugang bereitgestellt wird, über den der signierte Auditdatensatz lesend abrufbar ist.

5. Verfahren nach einem der vorhergehenden Ansprüche, wobei die technische Ausführungsumgebung eine medizinische Entscheidungsassistenz, autonome Mobilität, Finanzmarktüberwachung, kritische Infrastruktur, strategische Assistenz oder quantenbasierte Entscheidungssteuerung betrifft.

6. Verfahren nach einem der vorhergehenden Ansprüche, wobei die Aktionsausgabe bei Forecast-Divergenz, strukturellem Widerspruch oder Unterschreiten einer Freigabeschwelle automatisch einem Fail-Safe-, Review- oder Fallback-Pfad zugeführt wird.
